# EUROPEAN PATENT APPLICATION

(11) **EP 4 819 517 A1**
(43) Date of publication of application: **07.10.2026**
(21) Application number: 25305502.4
(22) Date of filing: 04.04.2025
(51) Int. Cl.: H04L 1/00, G05B 19/042, G05B 19/418

(54) **METHOD AND SYSTEM FOR ROBUST PROCESSING OF COMMUNICATION FRAMES IN AN INDUSTRIAL SYSTEM**

(71) Applicant: Schneider Toshiba Inverter Europe SAS, 27120 Pacy-sur-Eure (FR)
(72) Inventor: DESCROIZETTE, Pierre, 76800 ST ETIENNE DU ROUVRAY (FR)
(74) Representative: Plasseraud IP

(57) **Abstract**

The present invention relates to a method for robust processing of communication frames in an industrial system, the method comprising:
- receiving a communication frame comprising a plurality of data elements;
- detecting corruption in the communication frame based on an error detection mechanism;
- analyzing each data element in the corrupted communication frame to determine the validity and usability of each data element based on predefined criteria;
- retaining the data element determined to be valid and usable;
- replacing the data element determined to be invalid and non-usable with an estimated value;
- processing the selectively retained and replaced data elements to allow the industrial system operation to continue without triggering an immediate system fault.

The invention maintains continuous industrial system operation without immediate faults, significantly enhancing communication reliability and operational robustness.

## Description

### FIELD OF INVENTION

The present invention relates generally to industrial communication systems, and more particularly to a method and system for improving the robustness of data processing in such communication systems.

### BACKGROUND

In industrial environments, reliable communication between devices, such as motors, sensors, controllers, and actuators, is essential for the safe and efficient operation of machinery and processes. Communication frames, which typically carry critical data including optional information such as control commands, sensor readings, and status information, are transmitted over networks that are often susceptible to disruptions. These disruptions can arise from electromagnetic interference, mechanical disconnections, component failures, or environmental factors such as chemical pollution. When such disturbances occur, they can corrupt the data within communication frames, potentially compromising system performance. In this case, reliability of these frames is essential, as corrupted data can lead to severe system faults, resulting in downtime, increased maintenance cost, and reduced operational efficiency.

The current state of the art employs error detection mechanisms, such as checksum verification, to assess the integrity of received communication frames. A checksum is computed based on the frame's data and compared to a transmitted checksum value. If the two do not match, the frame is deemed corrupted, and the system typically responds by flagging a communication fault. In many industrial applications, such as motor drives, this fault triggers an immediate halt in operations or a transition to a safe mode. While this approach ensures safety, it can be overly conservative, leading to unnecessary downtime and operational inefficiencies, particularly when the corruption is transient or affects only a portion of the frame.

Some existing systems utilize advanced checksum mechanisms capable of correcting a limited number of bit errors (e.g., up to two corrupted bits). However, these methods require significant computational resources and are not universally implemented. Moreover, when corruption exceeds the correction capacity, the entire frame is discarded, regardless of whether some data elements remain usable. This all-or-nothing approach fails to exploit the potential value of partially corrupted frames, where certain data elements might still be accurate or only slightly altered.

Consequently, there exists a need within industrial applications for an improved method and system capable of robustly handling corrupted communication frames, thereby enhancing system robustness and minimizing disruptions due to transient errors

The present invention aims to improve these drawbacks.

### SUMMARY

In this regard, according to one aspect of the invention, it is provided a method for robust processing of communication frames in an industrial system, the method comprising:
- receiving a communication frame comprising a plurality of data elements;
- detecting corruption in the communication frame based on an error detection mechanism;
- analyzing each data element in the corrupted communication frame to determine the validity and usability of each data element based on predefined criteria;
- retaining the data element determined to be valid and usable;
- replacing the data element determined to be invalid and non-usable with an estimated value;
- processing the selectively retained and replaced data elements to allow the industrial system operation to continue without triggering an immediate system fault.

In the context of the present invention, the communication frames contain data elements and are usually beginning by a predefine header, containing data, ending by the calculated checksum. The data elements may comprise at least one of the following:
- Physical measurement values, including motor voltage, motor current, temperature, DC bus voltage, mains voltage, mains current, offset voltage, internal voltage, and sensor data;
- Physical data that are derived indirectly rather than directly measured, such as motor speed, flux, torque, power consumption, integral values, or derivative values; and
- Counter values.

Alternatively, these data elements can also be described as quantitative data, encompassing both discrete and continuous forms, capable of being measured, calculated, or counted.

Unlike traditional approaches that discard entire frames upon detecting corruption, the inventive method avoids unnecessary faults by selectively analyzing individual data elements in corrupted communication frames, retaining usable data, and intelligently replacing invalid data elements with estimated values, thereby maintaining system operation without immediate interruption, so as to reduce downtime and enhance operational efficiency by preventing unnecessary faults, particularly in response to transient disturbances common in industrial environments.

Optionally, the validity and usability of each data element is determined by checking if each data element is:
- the valid and usable data element, if it falls within a tangible area which defines a normal range of acceptable values for that data element; or
- the invalid and non-usable data element, if it falls outside the tangible area.

It defines a clear criterion for distinguishing usable data from corrupted data, based on expected behavior or norms for each data type, increasing accuracy in data retention decisions, ensuring only truly unreliable data is replaced, thus preserving system integrity.

Preferably, the tangible area is determined based on:
- a projected variation range of the signal over time;
- an estimated waveform model of the signal; or
- a static range of possible values.

This enables specific characteristics of each data element, reflecting physical or operational constraints, and enhances flexibility and precision, allowing the method to adapt to diverse data types and system conditions.

Preferably, the method further comprises dynamically adjusting the tangible area based on real-time system conditions to refine the criteria for determining valid and usable data elements.

This improves robustness by maintaining accuracy under varying conditions, reducing false negatives or positives in data validation.

Optionally, the error detection mechanism is a checksum verification, and it comprises:
- computing a checksum based on the data elements of the received frame; and
- comparing the computed checksum with the associated checksum received with the data frame, wherein a mismatch indicates corruption.

This quickly and efficiently identifies corrupted frames without requiring extensive computational resources

Optionally, the estimated value is selected from:
- a previously stored valid value for the data element;
- a value estimated from preceding data elements of the same type; or
- a value derived using an artificial intelligence model trained on historical communication data.

This enhances system resilience by offering robust alternatives, minimizing disruptions even when corruption occurs.

Preferably, the estimated value generated by the artificial intelligence model is derived from:
- a machine learning algorithm trained on historical communication data, or
- a real-time adjustment mechanism that dynamically refines estimation accuracy.

This leverages advanced algorithms to predict accurate replacement values, improving over time with learning, reducing reliance on static or simplistic substitutes.

Optionally, the data elements comprise at least one of:
- physical measurement values, including motor voltage, motor current, temperature, DC bus voltage, network mains voltage, mains current, offset voltage, internal voltage, or sensor data;
- estimated or reconstructed physical data, including motor speed, flux estimation, or power consumption reconstruction;
- computed or derived data, including counters, internal integrators, or derivatives; and
- predefined header values.

This applies the robust processing framework across a wide range of data types within a single frame.

Optionally, the processing of selectively retained and replaced data elements is limited to a predefined number of consecutive corrupted frames to prevent error accumulation.

This prevents error accumulation that could compromise system reliability over extended periods of corruption.

According to another aspect of the invention, it is also provided a computer program product comprising instructions to be executed by a processor, the instructions being adapted to performance of a method as mentioned above when executed by the processor.

According to a third aspect of the invention, it is further provided a system for robust processing of communication frames in an industrial system, comprising:
- a communication interface configured to receive a communication frame comprising at least one data element;
- a corruption detection module configured to detect corruption in the communication frame based on an error detection mechanism;
- a data validation module configured to analyze individual data elements to determine validity and usability based on predefined criteria;
- a retention module configured to retain data elements determined to be valid and usable;
- a replacement module configured to substitute data elements determined to be invalid and unusable with estimated values; and
- a processing unit configured to process the selectively retained and replaced data elements to allow continued system operation without triggering an immediate fault.

The system ensures operational continuity in industrial environments through flexible and adaptive data correction strategies.

In summary, the invention offers a nuanced, data-element-level approach to handling communication errors, significantly improving system robustness, reducing downtime, and enhancing operational continuity in industrial settings.

### BRIEF DESCRIPTION OF THE DRAWINGS

Other features and advantages of the present invention will appear in the description hereinafter, in reference to the appended drawings, where:
Figure 1 illustrates a flowchart illustrating the method for robust processing of corrupted communication frames according to an embodiment of the present invention.;
Figure 2 illustrates an example of a tangible area of temperature;
Figure 3 illustrates an example of a tangible area of motor current;
Figure 4 illustrates an example of a tangible area of motor voltage; and
Figure 5 illustrates an example of a tangible area of structured data.

### DESCRIPTION OF EMBODIMENTS

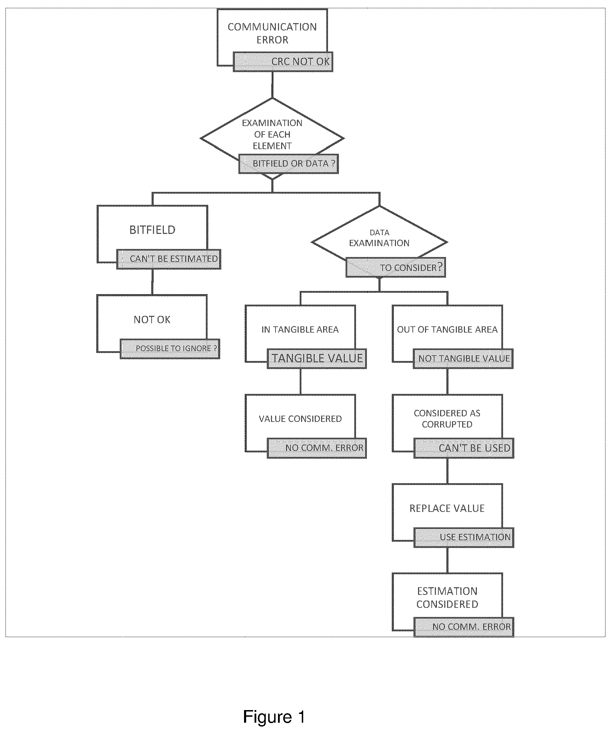

Figure 1 illustrates a detailed flowchart of an exemplary embodiment of the method for robust processing of communication frames in an industrial system, according to the present invention.

### - Communication Error Detection

The flowchart begins when a communication frame is received and an error detection mechanism, such as Cyclic Redundancy Check (CRC) or checksum verification, is performed. If the CRC verification indicates that the data integrity of the frame is compromised ("CRC NOT OK"), the frame is recognized as corrupted, initiating the robust data handling process according to the present invention. In the present invention, The communication frames are usually beginning by a predefine header, containing data elements, ending by the calculated checksum. The data elements, for example, comprise at least one of:
Physical measurement values selected from motor voltage, motor current, temperature, DC bus voltages, mains voltages, mains currents, offset voltage, internal voltage, sensor data;
Physical data, but not directly measured, selected from a motor speed; a flux; a torque, a power consumption, integrals or derivatives data; and
Counters.

### - Individual Data Element Examination

Upon identifying a corrupted frame, the method may move to examine each individual data element within that frame separately. At this stage, a first determination optionally is made as to whether each individual data element is of a "BITFIELD" type or a standard "DATA" type.

### - Bitfield Data Elements (Optional)

For bitfield-type data elements, the method may acknowledge that estimation might not be straightforward ("CAN'T BE ESTIMATED"). In this case, a decision is taken whether the error can be ignored without negatively impacting the system. If the bitfield error cannot be ignored, the bitfield data element is flagged as "NOT OK," and appropriate fault handling may occur, potentially discarding or ignoring that specific bitfield.

### - Standard Data Element Examination

For standard data elements, the examination involves determining if the individual data element should be considered for validity analysis.

The validity and usability of each standard data element is determined according to predefined or dynamically adjusted criteria, known as the "tangible area." This area represents a normal or acceptable range for data values.

In particular, the tangible area is defined as an expected, realistic range of acceptable values for a data element, linked to the physical or practical reality of the specific measured or estimated signals. The tangible area is crucial for determining whether a data element within a communication frame remains valid and usable or is considered corrupted and requires replacement. For instance, the tangible area can be determined or defined by various methods as follows:
1. Projections: If the possible variation of the measured signal over time is physically known or predictable, the tangible area can be defined based on previous samples and projected physical limits of the measurement.
2. Estimation: When the waveform or pattern of the measured signal is known or predictable, future measurements can be estimated with a known accuracy range based on previous measurements.
3. Other Techniques: It may comprise artificial intelligence (AI) predictions, known static ranges based on device specifications or environmental limitations, or simple averaging or retaining previous valid measurements.

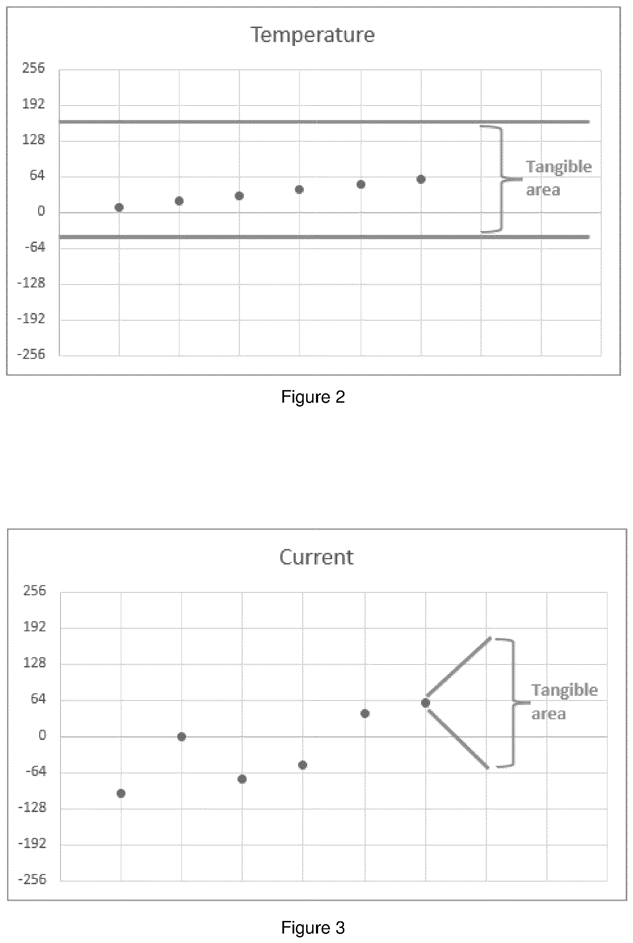

Figure 2 shows an example of a tangible area of temperature. It shows a temperature range from -40°C to +150°C, which is a normal expected range. Data received could theoretically range from -256°C to +256°C. The tangible area for temperature data is set to the known static range of possible physical values, such as -40°C to +150°C. Any received temperature data outside this range is considered invalid and non-usable. Thus, the tangible area effectively filters out clearly erroneous measurements caused by data corruption.

Figure 3 shows an example of a tangible area of motor current. Motor current measurements have physical limits in how quickly they can vary, for example limited rate of change dl/dt. The tangible area here is dynamic and determined by projecting allowable variation from previous valid measurements. This means each new measurement is validated by checking if it falls within a projection-based tangible area established from historical or immediately preceding valid data. This accounts for realistic operational constraints, enabling adaptive, real-time validation.

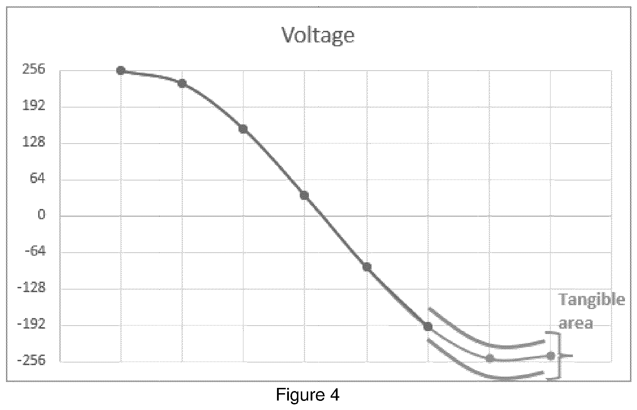

Figure 4 shows an example of a tangible area of motor voltage. Motor voltage typically follows a sinusoidal waveform during normal operation. The tangible area in this case is dynamically established based on an estimation of the waveform with a known accuracy range. Given that future values of motor voltage can be predicted (e.g., by sinusoidal extrapolation), the tangible area is defined as an accuracy range around this predicted waveform. This estimation-based approach allows accurate identification of corrupted data by comparing received measurements with realistic expected values, significantly enhancing the accuracy of data validation.

In addition to the tangible areas defined for measurement-based data (such as temperature, motor current, and voltage), the concept of a tangible area can also be effectively applied to structured data, such as header values, within communication frames.

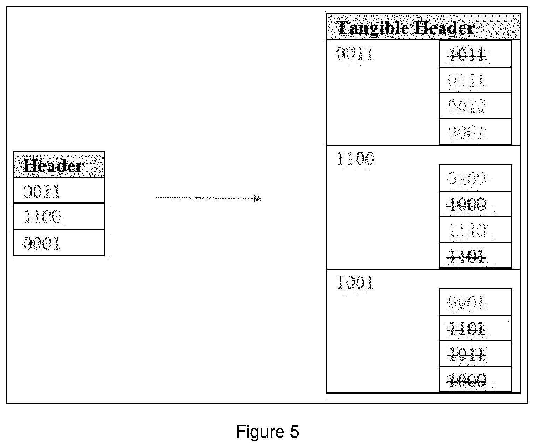

As shown in Figure 5, data elements, such as header fields, can have predefined binary values (e.g., 0011, 1100, 0001 as shown in the left-side table in Figure 5). When a data element is received and detected as corrupted, the method detects the assumption of a single bit corruption and evaluates how close the corrupted value is to each known valid value by calculating the Hamming distance, which counts how many bits differ between two binary values. The method can also compare the corrupted value from a known predefined list. In this example, tangible area is a set of binary values that can be reliably identified and corrected back to their original predefined values when corrupted by single-bit errors.
- In Figure 5, the right-side table shows predefined header values can generate several possible corrupted variants when a single-bit error occurs. Each predefined header value is expanded into a group containing these variants. If the received value has a Hamming distance of exactly 1 from only one of the known valid headers, it is assumed to be a single-bit corruption of that specific header. The method can confidently correct the received value by replacing it with the unique valid header it closely matches. In the right-side table of Figure 5, values shown under only one original header represent this scenario (e.g., 0111 is listed only as a potential derivative of 0011; 0100 only under 1100)
- If the received value has a Hamming distance of 1 from more than one known valid header, the original intended value cannot be determined unambiguously based on the single-bit error assumption. The data is considered invalid or uncorrectable by this method. In the right-side table of Figure 5, values listed under multiple original headers illustrate this ambiguity (e.g., the value 1011 appears as a potential result from both 0011 and 1001; similarly, 1000, and 1101 also appear linked to multiple possible original headers in this specific example)..
- If the corrupted value differs by more than one bit, the data element is considered invalid and cannot be reliably corrected.

Thus, by using the tangible area defined by known valid values and measuring bit differences (Hamming distance), the system can selectively correct minor corruptions while reliably identifying data that cannot be confidently recovered.

### - Data within Tangible Area (Valid Data):

If the analyzed data element falls within this tangible area ("TANGIBLE VALUE"), the data element is determined to be valid and usable. Consequently, it is retained for subsequent processing without modification.

### - Data Outside Tangible Area (Invalid Data):

If the data element falls outside the tangible area ("NOT TANGIBLE VALUE"), it is considered corrupted or invalid and thus non-usable ("CAN'T BE USED"). According to the present invention, this invalid data element is not simply discarded; rather, a proactive estimation and replacement mechanism is initiated.

### - Estimation and Replacement of Invalid Data

For data elements determined to be invalid, the method implements an estimation mechanism ("USE ESTIMATION"). The estimated replacement value can be selected from various methods, including:
Using a previously stored valid value for that data element.
Estimating the value based on preceding valid data elements.
Employing an artificial intelligence model trained on historical communication data, for example generated by a machine learning algorithm trained on historical communication data, or a real-time adjustment mechanism that dynamically refines estimation accuracy.
Once an estimated value is generated, it replaces the original corrupted data element, and this corrected data element is deemed valid for continued processing ("NO COMM. ERROR").

### - Continued Operation without Immediate Fault

Finally, after selectively retaining valid data elements and replacing invalid data elements with estimated values, the resulting frame is processed normally by the industrial system. This step ensures that the operation continues without triggering an immediate system fault.

Advantageously, the processing of selectively retained and replaced data elements is limited to a predefined number of consecutive corrupted frames to prevent error accumulation.

The invention achieves superior robustness in industrial communications by intelligently handling corrupted data, selectively retaining valid information, and precisely estimating corrupted data elements. The method and system significantly reduce unnecessary downtime and improve overall operational reliability and efficiency in industrial environments.

Moreover, it is known to those skilled in the art, the aforementioned exemplary embodiments according to the present invention can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The embodiments described hereinabove are illustrations of this invention. Various modifications can be made to them without leaving the scope of the invention which stems from the annexed claims.

## Claims

1. A method for robust processing of communication frames in an industrial system, the method comprising:
- receiving a communication frame comprising a plurality of data elements;
- detecting corruption in the communication frame based on an error detection mechanism;
- analyzing each data element in the corrupted communication frame to determine the validity and usability of each data element based on predefined criteria;
- retaining the data element determined to be valid and usable;
- replacing the data element determined to be invalid and non-usable with an estimated value;
- processing the selectively retained and replaced data elements to allow the industrial system operation to continue without triggering an immediate system fault.

2. The method of claim 1, wherein the validity and usability of each data element is determined by checking if each data element is:
- the valid and usable data element, if it falls within a tangible area which defines a normal range of acceptable values for that data element; or
- the invalid and non-usable data element, if it falls outside the tangible area.

3. The method of claim 2, wherein the tangible area is determined based on:
- a projected variation range of the signal over time;
- an estimated waveform model of the signal; or
- a static range of possible values.

4. The method of claim 2, wherein the method further comprises dynamically adjusting the tangible area based on real-time system conditions to refine the criteria for determining valid and usable data elements.

5. The method of claim 1, wherein the error detection mechanism is a checksum verification, and it comprises:
- computing a checksum based on the data elements of the received frame; and
- comparing the computed checksum with the associated checksum received with the data frame, wherein a mismatch indicates corruption.

6. The method of claim 1, wherein the estimated value is selected from:
- a previously stored valid value for the data element;
- a value estimated from preceding data elements of the same type; or
- a value derived using an artificial intelligence model trained on historical communication data.

7. The method of claim 6, wherein the estimated value generated by the artificial intelligence model is derived from:
- a machine learning algorithm trained on historical communication data, or
- a real-time adjustment mechanism that dynamically refines estimation accuracy.

8. The method of claim 1, wherein the data elements comprise at least one of:
- physical measurement values, including motor voltage, motor current, temperature, DC bus voltage, network mains voltage, mains current, offset voltage, internal voltage, or sensor data;
- estimated or reconstructed physical data, including motor speed, flux estimation, or power consumption reconstruction;
- computed or derived data, including counters, internal integrators, or derivatives; and
- predefined header values.

9. The method of claim 1, wherein the processing of selectively retained and replaced data elements is limited to a predefined number of consecutive corrupted frames to prevent error accumulation.

10. A system for robust processing of communication frames in an industrial system, comprising:
- a communication interface configured to receive a communication frame comprising at least one data element;
- a corruption detection module configured to detect corruption in the communication frame based on an error detection mechanism;
- a data validation module configured to analyze individual data elements to determine validity and usability based on predefined criteria;
- a retention module configured to retain data elements determined to be valid and usable;
- a replacement module configured to substitute data elements determined to be invalid and unusable with estimated values;
- a processing unit configured to process the selectively retained and replaced data elements to allow continued system operation without triggering an immediate fault.
